# EUROPEAN PATENT SPECIFICATION

(11) **EP 2 324 066 B1**
(45) Date of publication and mention of the grant of the patent: **27.05.2015**
(21) Application number: 09810446.6
(22) Date of filing: 13.08.2009
(51) Int. Cl.: C08F 279/02, C08L 69/00, C08L 77/00, C08L 67/04, C08L 67/02, C08F 20/02, C08F 20/62, C08F 120/02, C08F 120/62, C08F 220/02, C08F 220/62, C08L 101/00, C08F 222/06, C08F 220/32, C08L 33/06, C08L 51/00, C08L 51/04

(54) **FUNCTIONALIZED BIMODAL IMPACT MODIFIERS**
FUNKTIONALISIERTE BIMODALE ELASTIFIKATOREN
MODIFICATEURS DE RÉSISTANCE AU CHOC BIMODAUX FONCTIONNALISÉS

(30) Priority: 29.08.2008 US 92906 P
(43) Date of publication of application: 25.05.2011
(73) Proprietor: ARKEMA INC., King of Prussia PA 19406 (US)
(72) Inventor: LYONS, Jason, M., King Of Prussia PA 19406 (US); SHEN, Xianfeng, King Of Prussia PA 19406 (US)
(74) Representative: Albani, Dalila
(86) International application number: PCT/US2009/053694
(87) International publication number: WO 2010/025040

(56) References cited:
- WO-A1-02/055572
- US-A- 4 739 010
- US-A- 5 089 557
- US-A1- 2003 236 350
- US-A1- 2006 069 210
- US-A1- 2008 132 641

## Description

### Field of the Invention

The invention relates to functionalized bimodal butadiene-methylmethacrylate impact modifiers. The impact modifiers are especially useful in blends of engineering resins, particularly where the blend contains both functional and non-functional resins. Polycarbonate (PC)/polyethylene terephthalate (PET) blends using the functionalized bimodal butadiene-methylmethacrylate impact modifiers of the invention have excellent low temperature impact performance.

### Background of the Invention

Synthetic resins are widely used as engineering plastics in a variety of end-uses, such as building materials and automobile parts. The engineering resins have good physical and chemical resistance, and are low cost. A disadvantage of many engineering resins is that they have poor impact strength. Poor impact strength of these materials may be overcome by blending impact modifiers with the resins.

Impact modifiers generally consist of low-Tg, elastomeric polymers. Unfortunately the low-Tg polymer particles are typically difficult to handle. They are tacky and tend to stick together (blockiness), forming clumps or agglomerates during processing and storage. The agglomerates may be difficult to separate and disperse into the engineering polymer matrix, leading to a less than optimal modification of the plastic.

Core shell impact modifiers typically have rigid high T_{g} polymers in their outmost shell at levels sufficient to cover the elastomeric components. Such impact modifiers have good anti-blocking properties and are easy to handle. They can also be spray-dried or coagulated.

Hydroxy alkyl (meth)acrylate monomers have been incorporated into the shell of a core-shell modifier to improve compatiblization of the shell with the matrix polymer. The use of hydroxy-functional monomers in the shell has been described in US Patents Number 5,321,056 and 5,409,967.

JP 54-48850 describes the use of polymers made from hydroxyl-functional monomers for use as impact modifiers.

US Patent Number 6,130,290 describes a core-shell particle having a two-part shell. The outer shell contains a hydroxy alkyl (meth)acrylate copolymer, while the inner shell does not.

US Patent Number 7,195,820 describes a core-shell polymer impact modifier with hydrophilic monomer units in the shell. The purpose of the hydrophilic shell monomers units was to resist migration of the shell polymer into the core - thus reducing the amount of polymer shell needed for complete coverage of the core. These core-shell impact modifiers were considered useful in many different polymer matrixes.

Polymer matrixes consisting of blends of functional polymers with non-functional materials present a unique challenge for impact modification. Conventional core-shell impact modifiers with non-functional shells tend to migrate toward the non-functional parts of the blend. This decreases the effectiveness of the impact modifier on the functional polymer.

In "Functional MBS Impact Modifiers for PC/PBT Alloy" by William T. W. Tseng, and J.S. Lee, Journal of Applied Polymer Science, Vol. 76, 1280-1282 (2000) the use of a functionalized MBS in a PC/PBT is explored. A PC/PET blend was not described. The reference focuses on a grow-out process and does not describe micro-agglormeration.

US patent application 61/042848 describes an impact modifier having a core-shell impact modifier having a functionalized shell useful in polycarbonate/polyethylene terephthalate alloys. These mono-modal core/shell impact modifiers are made by a grow-out technology.

Surprisingly it was found that functionalized bi-modal core-shell impact modifiers provide even more impact modification at the same functionalization and loading as the mono-modal functionalized impact modifiers. While not being bound to any particular theory, it is believed the mono-modal impact modifiers have a poorer dispersion associated with smaller particles. Dart drop impact was dramatically improved with particles containing no styrene.

### Summary of the Invention

The invention relates to a functionalized impact modifier having an elastomeric core and a functionalized outer shell, in which the functionalized impact modifier particles have a bimodal particle size distribution and wherein the outer shell comprises one or more hard polymers having a Tg in the range from 40 to 150°C.

### Brief Description of the Drawings

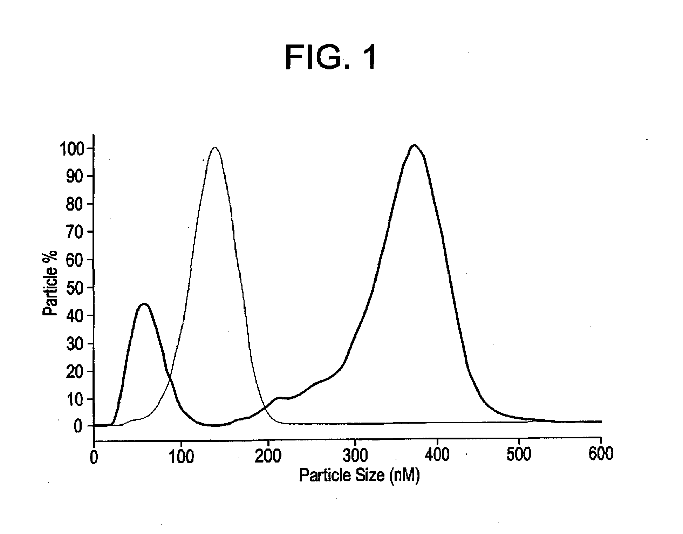

Figure 1 is a plot showing the bimodal nature of the microagglomerated impact modifier of the present invention, compared to the unimodal distribution from a typical grow-out process.

### Detailed Description of the Invention

The invention relates to functionalized bimodal butadiene-methylmethacrylate impact modifiers. The bi-modal impact modifiers are formed by the graft polymerization of a high Tg functional polymer over a micro-agglomerated elastomeric rubber particle.

By "polymers" and "resins", as used herein, is meant homopolymers and copolymers - with copolymers including polymers formed from two or more different monomers, such as terpolymers, etc. The copolymer may be random, block, graft, or tapered, and may have any architecture, such as branched, star, or comb polymers.

An elastomeric seed polymer is prepared by polymerization of one or more low Tg monomers. The polymerization can occur by any known means, including but not limited to solution polymerization, suspension polymerization, emulsion polymerization and reverse emulsion polymerization. The polymerization can be a bulk polymerization or a staged polymerization. In a preferred embodiment, a bulk emulsion polymerization is used.

By "elastomeric" and "elastomer", as used herein, is meant any polymer or copolymer having a glass transition temperature (Tg) of less than 25°C. Preferably the elastomeric polymer has a Tg of from -120 to 0°C. Most preferably the elastomeric polymer has a Tg of from -90 to -10°C.

The elastomeric polymer seed is composed of one or more monomers. Examples of elastomeric polymers that could used as the seed polymer include, but are not limited to, polybutadiene, butadiene-styrene copolymers, methacrylate-butadiene-styrene terpolymers, polyisoprene, C₂-C₁₈ acrylic polymers, acrylonitrile copolymers, siloxanes or silicon containing elastomers. In a preferred embodiment, the elastomer is polybutadiene. Small amounts of crosslinking monomer may optionally be added, though a pure polybutadiene will exhibit a slight level of crosslinking due to the nature of butadiene during polymerization.

The elastomeric seed polymers useful in the invention have an average particle size of 50 to 100 nanometers, and preferably from 75 to 90 nanometers.

The polymers are agglomerated in the presence of an acid-containing polymer. The acid-containing polymer is a copolymer containing from 3 - 30 weight percent of acid monomers, and preferably from 5 to 25 percent acid monomer. Especially useful acid monomers are carboxylic acid such as acrylic acid and methacrylic acid. Acid anhydrides may also be used, though the acids are preferred. The acid monomer is copolymerized with one or more other ethylenically unsaturated monomers. Useful monomers include, but are not limited to butyl acrylate, methacrylic acid, acrylic acid, methyl acrylate, ethyl acrylate, butyl methacrylate, and styrene. In a preferred embodiment the acid monomer is polymerized with (meth)acrylic monomers.

In one embodiment, a C₁₋₄ alkyl acrylate is used as the co-monomer in a bulk emulsion polymerization to form an acid-containing copolymer latex. The average size particle size of the acid-containing copolymer is generally in the range of 0.01 to 7 microns, and preferably from 0.05 to 1.0 microns.

The elastomeric seed latex is agglomerated by heating the elastomeric seed to a temperature of 50 - 90°C and slowly adding from 0.5 to 5 weight percent of the acid-containing copolymer latex with stirring. The agglomerated rubber particles have an average particle size of from 0.08 to 0.5 microns, and have a bimodal distribution.

The agglomerated latex particles are then graft polymerized to form one or more hard polymer shells. Ideally the shell covers the unagglomerated particles, and most of the agglomerated particles. By hard polymer it is meant a polymer having a Tg in the range of from 40 to 150°C, and preferably in the range of from 60 to 140°C. The outermost shell layer contains from 0.5 to 40, preferably 0.5 to 30 weight percent, and more preferably 1 to 20 weight percent, of functional units, either as a blend of functional and non-functional polymers, or as least one copolymer formed from at least one non-functional monomer and at least one functional monomer.

By "functional shell polymer", as used herein, means either a blend of functional and non-functional polymers, or at least one copolymer containing one or more different functional groups, either in the copolymer backbone, as pendant groups, or both. The functionalized copolymer may be formed in several different ways, as known in the art. These include copolymerization (random or block) of one or more functional monomers with non-functional monomers, grafting, and post-polymerization functionalization of a polymer, or a mixture thereof.

Non-functional ethylenically unsaturated monomers useful in forming the shell polymer include, but are not limited to, styrene, (meth)acrylonitrile, ethyl acrylate, propyl acrylate, butyl acrylate, methyl methacrylate, divinyl benzene, acrylonitrile, and mixtures thereof. In one embodiment, a first shell of primarily styrene is first formed, and then a second shell containing acrylic monomers (primarily MMA) and the functionalized monomer is polymerized on top of the styrene shell. In a preferred embodiment, there is no styrene monomer in the shell polymers.

Functional monomers useful as comonomers to add functionality to the copolymer include, but are not limited to, those containing acid, anhydride, hydroxy, epoxy, and amine groups. Examples of useful functional comonomers include, but are not limited to: N,N-dimethylaminoethyl(meth)acrylate, N,N-diethylaminoethyl (meth)acrylate, (meth)acrylamide, N,N-dimethylacrylamide, N-metlaylolacrylamide, N-methylaminopropyl(meth)acrylamide, N,N-dimethylaminopropyl(meth)acrylamide, N-ethylamino propyl(meth)acrylamide, N,N-diethylaminopropyl (meth)acrylamide, N-methylacrylamide or N-t-butylacrylamide or N-ethyl (meth)acrylamide or chlorides of these compounds, 2-hydroxyethyl(meth)acrylate, hydroxypropyl(meth)acrylate, 4-hydroxybutyl (meth)acrylate, glycidyl(meth)acrylate, ethyl alpha-hydroxymethacrylate, and 2,3-dihydroxypropyl(meth)acrylate, maleic anhydride, maleic acid, substituted maleic anhydride, mono-ester of maleic anhydride, itaconic anhydride, itaconic acid, substituted itaconic anhydride, glutaric anhydride, monoester of itaconic acid, fumaric acid, fumaric anhydride, fumaric acid, substituted fumaric anhydride, monoester of fumaric acid, crotonic acid and its derivatives, acrylic acid, and methacrylic acid; cyanoalkoxyalkyl (meth)acrylates such as omega-cyanoethoxyethyl acrylate, or omega-cyanoethoxyethyl methacrylate; vinyl monomers containing an aromatic ring and an hydroxyl group, such as vinylphenol, para-vinylbenzyl alcohol, meta-vinylphenethyl alcohol, vinyl pyrrolidone, and vinyl imidazole; and other functional monomers, allyl cellosolve, allyl carbinol, methylvinyl carbinol, allyl alcohol, methyllyl alcohol, glycidyl methacrylate, 3,4-epoxybutyl acrylate, acrylonitrile, methacrylonitrile, beta-cyanoethyl methacrylate, beta-cyanoethyl acrylate, Examples of polymerizable surfactants or macromonomers with hydrophilic moieties useful in the present invention include, but are not limited to sodium 1-allyloxy-2-hydroxypropane sulfonate, phosphate methacrylate monomer, poly(ethylene glycol) methylether methacrylate, 1-methacrylamido, 2-imidazolidinone ethane. A preferred functionality is glycidyl(meth)acrylate or maleic anhydride.

The shell of the invention makes up less than 50 weight percent of the core-shell polymer, preferably less than 30 weight percent and most preferably from 5 to 25 weight percent of the core-shell polymer.

The final bimodal copolymer is a blend of particles having the smaller particle size distribution of from 30 to less than 200 nanometers, preferably 50 to 150 nanometers. The larger particle size distribution has an average particle size of from 200 to 1,000 nanometers, and preferably from 200 to 600 nanometers, and more preferably from 250 - 500 nm. The smaller particle size mode comprises 5 to 40 weight percent of the blend, and preferably from 10 to 35 weight percent, while the particles in the larger mode make up 95 to 60 weight percent, and preferably 90 to 65 weight percent of the particles. The smaller particles are present at from 5 to 40 weight percent and preferably from 10 to 35 weight percent, and the larger particles at from 60 to 95 weight percent, and preferably 65 to 90 weight percent, based on the total weight of functionalized impact modifiers.

The functionalized bimodal impact modifier of the invention is especially useful in a polymer matrix that is a blend of a functional polymer or resin, and at least one other non-functional component. The good impact performance is especially in providing low temperature impact performance. The key to achieving this excellent low temperature impact performance is the ability to disperse the impact modifiers in the more brittle, polyester phase. While not being bound by any particular theory, it is believed that this localized dispersion is achieved due to the functionalized groups attached to the shell of the impact modifier. Functional groups can react with the hydroxyl groups on the esters in a PC/PET blend to anchor the modifier in the polyester domain.

The functional polymer in the matrix is a polymer that can interact with the functional shell on the impact modifier, to form an attraction that helps associate the impact modifier with the functional polymer. Examples of functional polymers useful in the present invention include, but are not limited to polyethylene terephthlate (PET); polybutylene terephthlate (PBT); glycol modified polyethylene terephthlate (PETG); thermosetting polyester; thermoplastic polyesters; thermoplastic co-polyesters; polyetheresteramides; polyamides such as nylon 11,12, 6, and 6,6; and natural polymers such as carbohydrates, cellulose, and biopolymers such as polylactic acid and polyhydroxy butyrate.

The non-functional components could be polymeric, non-polymeric, or a mixture thereof. Engineering resins useful as non-functional resins include, but are not limited to, alkyl (meth)acrylate polymers and copolymers, acrylonitrile/butadiene/styrene terpolymers (ABS), acrylonitrile/styrene/acrylate copolymers, polycarbonates, methacrylate/butadiene/styrene copolymers, polystyrene, acrylonitrile/acrylate copolymers, acrylonitrile/methyl methacrylate copolymers, polyolefins, poly(vinyl chloride), a homopolymer of a vinylidene halide, and alloys thereof.

The non-functional components could also be non-polymeric, including fillers such as pigments and glass beads.

The blend of nonfunctional to functional polymers is such that the nonfunctional polymer is present at from 20 - 80 wt percent, preferably from 40 - 75 weight percent and more preferably at from 50 - 75 weight percent, while said functional polymer is present at from 20-80 weight percent, preferably from 25 to 60 weight percent and more preferably at from 50 to 75 weight percent, based on the weight of the functional and non-functional polymers (not including the MBS impact modifier or other additives).

The functional core-shell impact modifier of the invention is blended into the polymeric composition at a level of from 0.5 to 70 percent by weight, and preferably 2 to 55 percent by weight, based on the weight of the polymers. The impact modifier may be blended into the plastic by standard means such as melt extrusion, compaction, roll mill, and other such means as known in the art.

In addition to the polymers and the impact modifier, one or more other additives may also be added at usual levels. Typical additives include, but are not limited to, processing aids, anti-oxidants, stabilizers, pigments, dyes, plasticizers, antioxidants, or lubricants.

The impact modified thermoplastic composition according to the invention can be prepared by any method which makes it possible to produce a homogeneous mixture containing a thermoplastic polymer, the impact additive according to the invention and optionally other additives. It is possible, for example, to dry-mix the ingredients constituting the resin composition, then to extrude the resulting mixture and to reduce the extrudate to pellets. When the thermoplastic polymer is obtained by emulsion polymerization, it may be convenient to mix the emulsion containing the core-shell additive according to the invention with the emulsion of the thermoplastic polymer and to treat the resulting emulsion in order to separate therefrom the solid product which it contains, as described above with respect to the separation of the core-shell polymer.

The impact modifier of the invention provides excellent impact modification in an instrumented dart drop test, run at 2.2 m/s at -25C. It was found that the functionalized microagglomerated impact modifiers of the invention performed at least twice as well as functionalized grow-out impact modifiers for same level of loading and functionality.

Some specific examples of the compositions of the invention are listed below. Those in the art would be able to recognize other examples of the invention, based on the specification and examples listed:
- The bimodal functionalized polymer and a blend of polycarbonate (20 to 80 wt%) and PET or polybutylene terephthalate (PBT) (20 - 80 wt% based on weight of total polymer solids).
- The bimodal functionalized polymer and a blend of a natural or biopolymer (such as polylactic acid) and a methyl(meth)acrylate homopolymer or copolymer.

The following examples are intended to illustrate further various aspects of the present invention, but are not intended to limit the scope of the invention in any aspect.

### Examples

### Example 1:

### Step 1: Preparation of base rubber latex (A)

To a 1-gallon high-pressure reactor was charged: water, beef tallow fatty acid potassium salts, potassium rosinate, 1,3-butadiene, *t*-dodecyl mercaptan, and diisopropylbenzene hydroperoxide as an initial kettle charge, as outlined below. The solution was heated, with agitation, to 43 °C at which time a redox-based catalyst solution (sodium tetrapyrophosphate, ferrous sulfate, and dextrose) was charged, effectively initiating the polymerization. Then the solution was further heated to 56 °C and held at this temperature for a period of six hours, yielding a rubber latex (A) of conversion of 98% with average particle size of 0.085 µm.

| **Synthesis of base rubber latex (A)** | |
|---|---|
| Water | 100 parts |
| Beef tallow fatty acids, potassium salts | 4 parts |
| Potassium rosinate | 2 parts |
| 1,3-Butadiene | 46 parts |
| t-Dodecyl mercaptan | 0.18 parts |
| Diisopropyl benzene hydroperoxide | 0.13 parts |
| Sodium tetrapyrophosphate | 0.09 parts |
| Ferrous sulfate | 0.002 parts |
| Dextrose | 0.11 parts |

### Step 2: Preparation of acid-group containing copolymer latex (B)

To a 5L reactor was charged: water, beef tallow fatty acid, potassium salts, and sodium dioctylsulfosuccinate as an initial charge, as outlined below. The solution was heated under nitrogen, with agitation, to 60 °C at which time a redox-based catalyst solution (sodium formaldehyde sulfoxylate, ferrous sulfate, and disodium ethylenediaminetetraacetate) was charged. Then the monomer mixtures (n-butyl acrylate and methacrylic acid) and the initiator (t-butyl hydroperoxide) were charged over three hours. The polymerization was finished one hour after the monomer charge. The resulting latex (B) had a conversion of 99% with average particle size of 0.10 µm.

| **Synthesis of acid-group containing latex (B)** | |
|---|---|
| Water | 200 parts |
| n-Butyl acrylate | 85 parts |
| Methacrylic acid | 15 parts |
| Beef tallow fatty acids, potassium salts | 2.3 parts |
| Sodium dioctylsulfosuccinate | 1.2 parts |
| t-Butyl hydroperoxide | 0.3 parts |
| Sodium formaldehyde sulfoxylate | 0.4 parts |
| Ferrous sulfate | 0.003 parts |
| Disodium ethylenediaminetetraacetate | 0.01 parts |

### Step 3: Preparation of agglomerated rubber latex (C) with enlarged particle size

100 parts (based on solids) of base rubber latex (A) was charged to a 5L reactor. The rubber latex was heated, with agitation, to 65 °C at which time 1.4 parts (based on solids) of the acid-group containing latex (B) was added slowly to the reactor. After 30 min under agitation, an agglomerated rubber latex (C) was obtained with an enlarged average particle size of 0.30 µm.

### Step 4: Graft polymerization onto the agglomerated rubber latex

Immediately following the formation of agglomerated rubber latex (73 parts based on solids), 0.15 parts of sodium formaldehyde sulfoxylate was added at 65 °C. The solution was heated up to 70 °C. Then 23 parts of methyl methacrylate, 2 parts of glycidyl methacrylate, and 0.1 parts of t-butyl hydroperoxide were slowly added to the reactor during 90 min. After the end of addition of monomers, the reaction was kept on hold for one hour. Anti-oxidant package was then added to the reactor and the reaction was allowed to cool to room temperature. [Anti-oxidant emulsion was made by heating a mixture of Triethyleneglycol-bis[3-(3-tert-butyl-4-hydroxy-5-methylphenyl)-propionate), Dilauryl Thiodipropionate, and Oleic acid followed by addition of a solution of potassium hydroxide in de-ionized water]

The resulting final latex was isolated by dilute sulfuric acid coagulation, washed, and dried to obtain white powders.

## Claims

1. Functionalized impact modifier particles comprising:
a) an elastomeric core, and
b) a functionalized outer shell,
wherein said impact modifier particles have a bimodal particle distribution and wherein the outer shell comprises one or more hard polymers having a Tg in the range from 40 to 150°C.

2. The impact modifier of claim 1, wherein said elastomeric core comprises a polymer having butadiene monomer units.

3. The impact modifier of claim 2, wherein said elastomeric core is a butadiene homopolymer.

4. The impact modifier of claim 1, wherein said elastomeric core is an acrylic (co)polymer.

5. The impact modifier according to any of claims 1 to 4, wherein the outermost shell comprises from 0.5 to 40 weight percent, based on the shell polymer, of functional groups and preferably from 0.5 to 30 weight percent, based on the shell polymer, of functional groups.

6. The impact modifier according to any of claims 1 to 5, wherein said core-shell polymer has an outermost shell comprising a functional (meth)acrylate.

7. The impact modifier of claim 1, wherein said core-shell polymer has an outermost shell copolymer comprising glycidyl methacrylate or maleic anhydride monomer units.

8. The impact modifier according to any of claims 1 to 7, wherein said core-shell polymer contains no styrene.

9. The impact modifier according to any of claims 1 to 8, wherein said bimodal particle distribution contains 5 to 40 weight percent of particles having an average particle size of from 30 nm to less than 200 nm, and 60 to 95 weight percent of particles having an average particle size of from 200 nm to 1,000 nm.

10. An impact modified polymer alloy composition comprising:
a) a functional polymer,
b) and at least one non-functional polymer, and
c) functionalized impact modifier particles comprising:
1) an elastomeric core, and
2) a functionalized outer shell,
wherein said impact modifier particles have a bimodal particle distribution and wherein the outer shell comprises one or more hard polymers having a Tg in the range from 40 to 150°C.

11. The impact modified polymer composition according to claim 10, wherein said functional polymer is selected from the group consisting of polyethylene terephthlate, polybutylene terephthalate, polyamides, glycol modified polyethylene terephthlate (PETG), thermosetting polyester; thermoplastic polyesters, thermoplastic co-polyesters, polyetheresteramides, polyamides, polyamide 11, polyamide 12, polyamide 6, polyamide 6,6, natural polymers, carbohydrates, cellulose, biopolymers, polylactic acid, polyhydroxy butyrate, and mixtures thereof.

12. The impact modified polymer composition according to claim 10, wherein said functional polymer is polyethylene terephthlate, polybutylene terephthalate, polyamides, polylactic acid, or glycol modified polyethylene terephthlate (PETG).

13. The impact modified polymer composition according to any of claims 10 to 12, wherein said non-functional polymer comprises polycarbonate, or polymethyl(meth)acrylate homopolymers and copolymers.

14. The impact modified polymer composition according to any of claims 10 to 13, wherein said polymer composition further comprises non-functional additives.

15. The impact modified polymer composition according to claim 14, wherein said non-functional additives are selected from the group consisting of glass beads, polymer beads, glass fibers, carbon nanotubes, and pigments

16. The impact modified polymer composition according to any of claims 10 to 15, wherein said functionalized impact modifier particles comprise from 0.5 to 70 wt% of the impact modified polymer alloy composition and preferably from 2 to 55 wt% of the impact modified polymer alloy composition, based on total weight of the polymers.

17. The impact modified polymer composition according to any of claims 10 to 16, wherein the outer shell of said functional core-shell impact comprises from 1 - 20 weight percent of functional groups.

18. The impact modified polymer composition according to any of claims 10 to 17, wherein the ratio of functional polymer to non-functional polymer is from 20:80 to 80:20 and preferably from 40:60 to 75:25.

## Patentansprüche

1. Funktionalisierte Schlagzähigkeitsmodifikatorteilchen, umfassend:
a) einen elastomeren Kern und
b) eine funktionalisierte Außenschale,
wobei die Schlagzähigkeitsmodifikatorteilchen eine bimodale Teilchenverteilung aufweisen und wobei die äußere Schale ein oder mehrere harte Polymere mit einer Tg im Bereich von 40 bis 150°C umfasst.

2. Schlagzähigkeitsmodifikator nach Anspruch 1, wobei der elastomere Kern ein Polymer mit Butadien-Monomereinheiten umfasst.

3. Schlagzähigkeitsmodifikator nach Anspruch 2, wobei es sich bei dem elastomeren Kern um ein Butadien-Homopolymer handelt.

4. Schlagzähigkeitsmodifikator nach Anspruch 1, wobei es sich bei dem elastomeren Kern um ein Acryl-(co)polymer handelt.

5. Schlagzähigkeitsmodifikator nach einem der Ansprüche 1 bis 4, wobei die Außenschale 0,5 bis 40 Gewichtsprozent, bezogen auf das Schalenpolymer, funktionelle Gruppen und vorzugweise 0,5 bis 30 Gewichtsprozent, bezogen auf das Schalenpolymer, funktionelle Gruppen umfasst.

6. Schlagzähigkeitsmodifikator nach einem der Ansprüche 1 bis 5, wobei das Kern-Schale-Polymer eine Außenschale, die ein funktionelles (Meth)-acrylat umfasst, aufweist.

7. Schlagzähigkeitsmodifikator nach Anspruch 1, wobei das Kern-Schale-Polymer ein Außenschalen-Copolymer, das Glycidylmethacrylat- oder Maleinsäureanhydrid-Monomereinheiten umfasst, aufweist.

8. Schlagzähigkeitsmodifikator nach einem der Ansprüche 1 bis 7, wobei das Kern-Schale-Polymer kein Styrol umfasst.

9. Schlagzähigkeitsmodifikator nach einem der Ansprüche 1 bis 8, wobei die bimodale Teilchenverteilung 5 bis 40 Gewichtsprozent Teilchen mit einer durchschnittlichen Teilchengröße von 30 nm bis weniger als 200 nm und 60 bis 95 Gewichtsprozent Teilchen mit einer durchschnittlichen Teilchengröße von 200 nm bis 1000 nm enthält.

10. Schlagzäh modifizierte Polymerlegierungszusammensetzung, umfassend:
a) ein funktionelles Polymer
b) und mindestens ein nichtfunktionelles Polymer und
c) funktionalisierte Schlagzähigkeitsmodifikatorteilchen, umfassend:
1) einen elastomeren Kern und
2) eine funktionalisierte Außenschale,
wobei die Schlagzähigkeitsmodifikatorteilchen eine bimodale Teilchenverteilung aufweisen und wobei die äußere Schale ein oder mehrere harte Polymere mit einer Tg im Bereich von 40 bis 150°C umfasst.

11. Schlagzäh modifizierte Polymerzusammensetzung nach Anspruch 10, wobei das funktionelle Polymer aus der Gruppe bestehend aus Polyethylenterephthalat, Polybutylenterephthalat, Polyamiden, glykolmodifiziertem Polyethylenterephthalat (PETG), duroplastischem Polyester, thermoplastischen Polyestern, thermoplastischen Copolyestern, Polyetheresteramiden, Polyamiden, Polyamid 11, Polyamid 12, Polyamid 6, Polyamid 6,6, natürlichen Polymeren, Kohlenhydraten, Cellulose, Biopolymeren, Polymilchsäure, Polyhydroxybutyrat und Mischungen davon ausgewählt ist.

12. Schlagzäh modifizierte Polymerzusammensetzung nach Anspruch 10, wobei es sich bei dem funktionellen Polymer um Polyethylenterephthalat, Polybutylenterephthalat, Polyamide, Polymilchsäure oder glykolmodifiziertes Polyethylenterephthalat (PETG) handelt.

13. Schlagzäh modifizierte Polymerzusammensetzung nach einem der Ansprüche 10 bis 12, wobei das nichtfunktionelle Polymer Polycarbonat oder Polymethyl(meth)acrylat-Homopolymere und -Copolymere umfasst.

14. Schlagzäh modifizierte Polymerzusammensetzung nach einem der Ansprüche 10 bis 13, wobei die Polymerzusammensetzung ferner nichtfunktionelle Additive umfasst.

15. Schlagzäh modifizierte Polymerzusammensetzung nach Anspruch 14, wobei die nichtfunktionellen Additive aus der Gruppe bestehend aus Glasperlen, Polymerperlen, Glasfasern, Kohlenstoffnanoröhren und Pigmenten ausgewählt sind.

16. Schlagzäh modifizierte Polymerzusammensetzung nach einem der Ansprüche 10 bis 15, wobei die funktionalisierten Schlagzähigkeitsmodifikatorteilchen 0,5 bis 70 Gew.-% der schlagzäh modifizierten Polymerlegierungszusammensetzung und vorzugsweise 2 bis 55 Gew.-% der schlagzäh modifizierten Polymerlegierungszusammensetzung, bezogen auf das Gesamtgewicht der Polymere, ausmachen.

17. Schlagzäh modifizierte Polymerzusammensetzung nach einem der Ansprüche 10 bis 16, wobei die Außenschale des funktionellen Kern-Schale-Schlagzähigkeitsmodifikators 1-20 Gewichtsprozent funktionelle Gruppen umfasst.

18. Schlagzäh modifizierte Polymerzusammensetzung nach einem der Ansprüche 10 bis 17, wobei das Verhältnis von funktionellem Polymer zu nichtfunktionellem Polymer 20:80 bis 80:20 und vorzugsweise 40:60 bis 75:25 beträgt.

## Revendications

1. Particules de modificateur de résistance au choc fonctionnalisé comprenant :
a) un noyau élastomère, et
b) une enveloppe externe fonctionnalisée,
lesdites particules de modificateur de résistance au choc ayant une distribution de particules bimodale et l'enveloppe externe comprenant un ou plusieurs polymères durs ayant un Tg dans la plage de 40 à 150 °C.

2. Modificateur de résistance au choc de la revendication 1, dans lequel ledit noyau élastomère comprend un polymère ayant des motifs monomères de butadiène.

3. Modificateur de résistance au choc de la revendication 2, dans lequel ledit noyau élastomère est un homopolymère de butadiène.

4. Modificateur de résistance au choc de la revendication 1, dans lequel ledit noyau élastomère est un (co)polymère acrylique.

5. Modificateur de résistance au choc selon l'une quelconque des revendications 1 à 4, dans lequel l'enveloppe externe comprend de 0,5 à 40 pour cent en poids, sur la base du polymère d'enveloppe, de groupes fonctionnels et de préférence de 0,5 à 30 pour cent en poids, sur la base du polymère d'enveloppe, de groupes fonctionnels.

6. Modificateur de résistance au choc selon l'une quelconque des revendications 1 à 5, dans lequel ledit polymère de noyau-enveloppe polymère a une enveloppe externe comprenant un (méth)acrylate fonctionnel.

7. Modificateur de résistance au choc de la revendication 1, dans lequel ledit polymère de noyau-enveloppe polymère a une enveloppe externe comprenant des motifs monomères de méthacrylate de glycidyle ou d'anhydride maléique.

8. Modificateur de résistance au choc selon l'une quelconque des revendications 1 à 7, dans lequel ledit polymère de noyau-enveloppe ne contient pas de styrène.

9. Modificateur de résistance au choc selon l'une quelconque des revendications 1 à 8, dans lequel ladite distribution de particules bimodale contient de 5 à 40 pour cent en poids de particules ayant une taille de particule moyenne de 30 nm à moins de 200 nm, et de 60 à 95 pour cent en poids de particules ayant une taille de particule moyenne de 200 nm à 1 000 nm.

10. Composition d'alliage de polymère à résistance aux chocs modifiée comprenant :
a) un polymère fonctionnel,
b) et au moins un polymère non fonctionnel, et
c) particules de modificateur de résistance au choc fonctionnalisé comprenant :
1) un noyau élastomère, et
2) une enveloppe externe fonctionnalisée,
lesdites particules de modificateur de résistance au choc ayant une distribution de particules bimodale et l'enveloppe externe comprenant un ou plusieurs polymères durs ayant un Tg dans la plage de 40 à 150 °C.

11. Composition de polymère à résistance au choc modifiée selon la revendication 10, dans laquelle ledit polymère fonctionnel est choisi dans le groupe constitué des polyéthylène-téréphtalate, polybutylène-téréphtalate, polyamides, polyéthylène-téréphtalate modifié par glycol (PETG), polyester thermodurcissable ; polyesters thermoplastiques, co-polyesters thermoplastiques, polyétheresteramides, polyamides, polyamide 11, polyamide 12, polyamide 6, polyamide 6,6, polymères naturels, glucides, cellulose, biopolymères, acide polylactique, polyhydroxybutyrate, et des mélanges de ceux-ci.

12. Composition de polymère à résistance au choc modifiée selon la revendication 10, dans laquelle ledit polymère fonctionnel est le polyéthylène-téréphtalate, le polybutylène-téréphtalate, des polyamides, l'acide polylactique, ou le polyéthylène-téréphtalate modifié par glycol (PETG).

13. Composition de polymère à résistance au choc modifiée selon l'une quelconque des revendications 10 à 12, dans laquelle ledit polymère non fonctionnel comprend du polycarbonate, ou des homopolymères et copolymères de poly(méth)acrylate de méthyle.

14. Composition de polymère à résistance au choc modifiée selon l'une quelconque des revendications 10 à 13, ladite composition de polymère comprenant en outre des additifs non fonctionnels.

15. Composition de polymère à résistance au choc modifiée selon la revendication 14, dans laquelle lesdits additifs non fonctionnels sont choisis dans le groupe constitué de billes de verre, billes de polymère, fibres de verre, nanotubes de carbone, et pigments.

16. Composition de polymère à résistance au choc modifiée selon l'une quelconque des revendications 10 à 15, dans laquelle lesdites particules de modificateur de résistance au choc fonctionnalisé comprennent de 0,5 à 70 % en poids de la composition d'alliage de polymère à résistance au choc modifiée et de préférence de 2 à 55 % en poids de la composition d'alliage de polymère à résistance au choc modifiée, sur la base du poids total des polymères.

17. Composition de polymère à résistance au choc modifiée selon l'une quelconque des revendications 10 à 16, dans laquelle l'enveloppe externe dudit modificateur de résistance au choc noyau-enveloppe fonctionnel comprend de 1 à 20 pour cent en poids de groupes fonctionnels.

18. Composition de polymère à résistance au choc modifiée selon l'une quelconque des revendications 10 à 17, dans laquelle le rapport du polymère fonctionnel au polymère non fonctionnel est de 20:80 à 80:20 et de préférence de 40:60 à 75:25.
